**Europäisches Patentamt**

(19) **European Patent Office**

**Office européen des brevets**

(11) Numéro de publication: **0 103 527**
**B1**

(12) # FASCICULE DE BREVET EUROPEEN

(45) Date de publication du fascicule du brevet:
**07.01.87**

(51) Int. Cl.⁴: **G 02 B 6/38,** H 01 R 4/48

(21) Numéro de dépôt: **83401797.2**

(22) Date de dépôt: **14.09.83**

(54) Dispositif de raccordement des extrémités de fibres optiques.

(30) Priorité: **17.09.82 FR 8215691**

(43) Date de publication de la demande:
**21.03.84 Bulletin 84/12**

(45) Mention de la délivrance du brevet:
**07.01.87 Bulletin 87/2**

(84) Etats contractants désignés:
**BE CH DE GB IT LI NL SE**

(56) Documents cités:
**FR - A - 2 344 037**
**FR - A - 2 485 754**
**US - A - 4 045 121**

(73) Titulaire: **SOCIETE ANONYME DE TELECOMMUNICATIONS, 41, rue Cantagrel, F-75624 Paris Cedex 13 (FR)**
Titulaire: **SOCIETE INDUSTRIELLE DE LIAISONS ELECTRIQUES - SILEC, 64bis, rue de Monceau, F-75008 Paris (FR)**

(72) Inventeur: **Delebeque, Robert Paul, 156bis, rue d'Aulnay, F-92290 Chatenay Malabry (FR)**

(74) Mandataire: **Martinet & Lapoux, 62, rue des Mathurins, F-75008 Paris (FR)**

## Description

La présente invention concerne un dispositif de raccordement des extrémités de deux fibres optiques comprenant un boîtier contenant un moyen de support des fibres ayant une rainure centrale pour recevoir les extrémités des fibres, et des surfaces d'appui des gaines des fibres de part et d'autre de la rainure, des premiers moyens pour presser les extrémités des fibres dans la rainure et des seconds moyens pour presser les gaines des fibres sur les surfaces d'appui.

Les dispositifs de raccordement connus de deux fibres optiques – ou de deux ensembles de fibres optiques deux à deux – exigent le démontage des différentes pièces composant le boîtier pour introduire ou retirer les fibres optiques. Les moyens de pressage sont constitués par le couvercle du boîtier ou par des pièces encastrées entre le couvercle et l'embase du boîtier qui sont fixées solidement au boîtier. Les opérations de démontage et de montage du dispositif sont longues et fastidieuses.

En outre, les boîtiers de ces dispositifs sont relativement encombrants et ne permettent pas un empilement lorsqu'on désire raccorder de nombreuses fibres optiques deux à deux, notamment lors du raccordement de câbles à fibres optiques.

Le présente invention a pour but principal de fournir un dispositif de raccordement de deux fibres optiques permettant un raccordement rapide sans faire appel à un quelconque démontage des pièces du dispositif.

A cette fin, un dispositif de raccordement tel que défini dans l'entrée en matière est caractérisé en ce que les premiers et seconds moyens de pressage sont montés coulissants dans le boîtier au dessus du moyen de support et sont rappelés contre le moyen de support par des moyens élastiques.

Bien que les moyens de pressage des fibres ne soient pas appliqués par des vis ou analogues sur le moyen de support, les forces exercées par les moyens élastiques sur les moyens de pressage et donc sur les fibres assurent néanmoins un maintien efficace des fibres dans le boîtier de façon à offrir une résistance suffisante à la traction. Le positionnement face à face des extrémités des fibres introduites par glissement dans le boîtier sur les surfaces d'appui et la rainure est aussi précis que dans les dispositifs de raccordement connus et assure la transmission des signaux optiques dans de bonnes conditions.

Le raccordement des extrémités préparées des fibres est d'une mise en œuvre simple et rapide puisqu'il ne nécessite que le relevage des moyens de pressage accessibles par l'extérieur du boîtier et que l'introduction par glissement des fibres sur le moyen de support dans le boîtier.

Selon un autre aspect de l'invention, le boîtier est très mince, de l'ordre de 3 mm, et permet son empilement avec d'autres tels boîtiers en vue de constituer un dispositif de raccordement multifibre. Ce dernier peut servir à raccorder plusieurs câbles multifibres ou à constituer une colonne d'un répartiteur raccordant des câbles optiques à des jarretières sous la forme de fibres optiques.

Les pièces composant le dispositif ont un coefficient de dilatation de préférence voisin de celui des fibres optiques ce qui assure que la jonction des fibres ne peut pas être perturbée par les variations notamment de température et d'humidité du milieu ambiant. Par exemple les qualités de raccordement ne sont pas pratiquement modifiées pour des variations de température entre −50 °C et +125 °C et par immersion accidentelle totale du dispositif dans l'eau douce ou l'eau de mer.

Comme il est connu, le boîtier contient un gel au moins au niveau de la jonction des fibres afin d'assurer la continuité d'indice de réfraction. Cependant, selon un mode de réalisation de l'invention, ce gel ne coule pas par son propre poids et ne s'échappe pas par les ouvertures du boîtier ce qui permet plusieurs introductions et retraits des fibres sans apport de gel, le gel n'étant pas entraîné vers l'extérieur par les fibres. Le gel est également auto-nettoyant et retient des poussières apposées malencontreusement aux extrémités des fibres lors de leur introduction dans le boîtier.

D'autres avantages et caractéristiques de la présente invention apparaîtront plus clairement à la lecture de la description suivante de plusieurs modes de réalisation en référence aux dessins annexés correspondants, dans lesquels:

– la Fig. 1 est une vue générale en perspective d'un dispositif de raccordement de deux fibres optiques;

– la Fig. 2 est une vue de face, externe à gauche et en coupe à droite, du dispositif de la Fig. 1;

– la Fig. 3 est une vue en coupe le long de la ligne brisée III–III de la Fig. 2;

– la Fig. 4 est une section transversale le long de la ligne III–III de la Fig. 2 montrant le pressage de l'extrémité, ici, dégainée, d'une fibre optique;

– la Fig. 5 est une section transversale le long de la ligne V–V de la Fig. 2 montrant le pressage de la gaine d'une fibre optique;

– les Figs. 6A et 6B sont des vues de face montrant un premier presseur du dispositif de la Fig. 1 en position basse et en position haute au moyen de l'outil de la Fig. 7;

– les Figs. 7 et 8 sont des vues en perspective des extrémités d'outils de relevage de presseur;

– la Fig. 9 est une vue de face d'une pince pour la prise d'une fibre optique;

– la Fig. 10 est une vue de côté de la pince prenant la fibre au-dessus d'un calibre;

– la Fig. 11 est une vue en perspective éclatée de deux dispositifs selon la Fig. 1, enfermés dans une boîte de raccordement;

– la Fig. 12 est une vue de côté d'un support pour recevoir des dispositifs selon la Fig. 1 en vue de former un dispositif de raccordement multifibre;

– la Fig. 13 est une vue en perspective d'une cloison du support de la Fig. 12;

– la Fig. 14 est une vue de côté du support avec les dispositifs de raccordement;

– la Fig. 15 est une vue de face d'un répartiteur comprenant plusieurs supports selon les Figs. 12 à 14;

– la Fig. 16 est une vue de face en coupe d'un dispositif de raccordement multifibre selon un second mode de réalisation;

– la Fig. 17 est une section le long de la ligne XVII–XVII de la Fig. 16;

– la Fig. 18 est une vue en coupe axiale de l'outil de relevage pour les presseurs du dispositif selon la Fig. 16;

– la Fig. 19 est une vue en perspective de l'extrémité à ergot de l'outil de relevage de la Fig. 18; et

– la Fig. 20 est une vue en bout de l'outil de la Fig. 18.

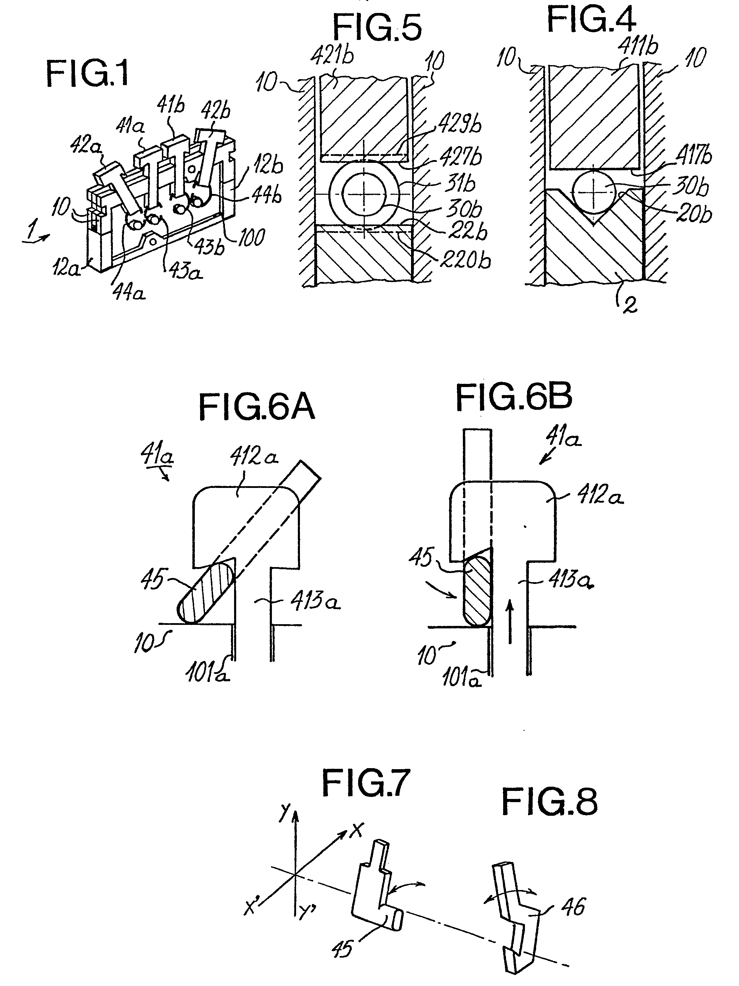

Le premier mode de réalisation du dispositif de raccordement des extrémités de deux fibres optiques est décrit ci-après en référence aux Figs. 1 à 3.

Comme cela apparaît à la Fig. 1, le dispositif se présente sous la forme d'un boîtier composite parallélépipédique mince 1 ayant une épaisseur d'environ 3 mm. Il est composé essentiellement de deux flasques longitudinaux 10 constituant les grandes faces rectangulaires du boîtier. Un support plat rectangulaire 2 (Fig. 2) est entretoisé par les flasques 10. Le support 2 a une surface qui est sensiblement égale à la moitié de celles des flasques 10. Entre les moitiés inférieures des flasques 10 sous un axe longidutinal horizontal X'X sensiblement médian du boîtier est enserré le support 2 au moyen de deux agrafes verticales, clips ou analogues 12a et 12b qui emprisonnent les petits chants transversaux des trois pièces 10 et 2.

Le dispositif de raccordement est symétrique par rapport à son petit axe médian transversal vertical Y'Y qui définit le plan de jonction des extrémités des deux fibres optiques 3a et 3b à raccorder. Dans la suite, des éléments ou parties symétriques sont désignés par un même numéro de référence auquel est adjoint l'indice a pour la moitié à gauche de l'axe Y'Y et par l'indice b pour la moitié à droite de l'axe Y'Y, comme montré à la Fig. 2.

Comme illustré en détail dans la moitié de droite de la Fig. 2, une rainure en vé 20 est prévue le long de l'axe X'X. Elle est ménagée dans le chant longitudinal supérieur de support 2. Sur ce dernier chant en se dirigeant vers le chant transversal respectif du support 2, chaque extrémité 20a, 20b de la rainure en vé est suivie d'un premier dégagement 21a, 21b, d'une surface d'appui plane horizontale 22a, 22b et enfin d'un second dégagement 23a, 23b débouchant sur ledit chant transversal respectif. L'ensemble 20a à 23a, 20b à 23b est propre à recevoir la fibre optique respective 3a, 3b.

Comme détaillée à la Fig. 4, la rainure en vé 20a, 20b reçoit l'extrémité ici dégaînée 30a, 30b formant l'extrémité du cœur de la fibre optique 3a, 3b et sa profondeur est telle que l'extrémité 30a, 30b dépasse d'environ un tiers du diamètre du cœur de la fibre.

Comme détaillé aux Figs. 2 et 5, la surface d'appui 22a, 22b est plane mais cependant pourvue de petites saignées transversales 220a, 220b. La surface d'appui 22a, 22b est en retrait du fond de la rainure 20a, 20b d'une distance sensiblement inférieure à l'épaisseur de la gaine 31a, 31b de la fibre optique 3a, 3b. Les saignées permettent d'ancrer la gaine lors de la poussée transversale de celle-ci par un second presseur – comme on le verra dans la suite – et ainsi de bloquer en translation et rotation la fibre dans le boîtier.

Les fonds des dégagements 21a, 21b et 23a, 23b sont en retrait de la rainure 20a, 20b et de la surface d'appui 22a, 22b de la gaine. Un produit gélifiant 24 remplit ces dégagements et entoure la transition gaine-fibre dénudée dans le premier dégagement 21a, 21b et la partie de la gaine 31a, 31b dans le second dégagement 23a, 23b. Ce second dégagement a ses extrémités 25a, 25b qui sont chanfreinées afin de faciliter l'introduction de la fibre 3a, 3b sur le support central 2, guidée entre les deux flasques 10.

Chaque moitié du boîtier 1 inclut également des moyens pour presser les fibres contre le chant longitudinal supérieur du support 2. Dans chaque moitié du boîtier 1, ces moyens de pressage sont composés d'un premier presseur 41a, 41b pour presser l'extrémité dégaînée 30a, 30b de la fibre respective 3a, 3b contre la rainure en vé 20a, 20b et d'un second presseur 42a, 42b pour presser l'extrémité de la gaine 31a, 31b de la fibre respective 3a, 3b contre la surface d'appui 22a, 22b.

Le premier presseur 41a, 41b est disposé le long d'un côté de l'axe Y'Y. Il est composé d'une pièce de préhension 410a, 410b à section longitudinale en T d'un pied basculant 411a, 411b. La tête 412a, 412b de la pièce en T surplombe les chants longitudinaux supérieurs des flasques 10. La jambe 413a, 413b de la pièce en T forme deux languettes verticales qui coulissent dans deux rainures verticales borgnes 101a, 101b pratiquées dans les flasques 10. Du côté de l'axe Y'Y, le coin du T de la pièce 410a, 410b est rempli d'un profilé médian 414a, 414b qui coulisse verticalement entre les deux flasques 10 et maintient ainsi le presseur 41a, 41b dans le boîtier 1. L'extrémité inférieure 415a, 415b de la jambe de la pièce en T 410a, 410b est terminée en chape. Autour de l'axe horizontal transversal 416a, 416b de chaque chape est monté à rotation un pied basculant 411a, 411b. Ce pied prismatique a une épaisseur égale à celle du profilé 414a, 414b et peut tourner et coulisser entre les parois internes supérieures en regard des flasques 10.

Le chant inférieur plan 417a, 417b du pied basculant 411a, 411b surplombe la rainure en vé 20a, 20b, comme montré à la Fig. 4. Il exerce une pression verticale, parallèle à l'axe Y'Y, le long de l'extrémité dégaînée 30a, 30b de la fibre respective 3a, 3b pour l'appliquer suivant deux génératrices dans la rainure en vé 20a, 20b sous l'action de deux ressorts 43a, 43b. Comme montré dans la partie de gauche de la Fig. 2 et dans la Fig. 3, chaque ressort à sensiblement la forme d'un demi-cercle à brins extrêmes recourbés. Les brins supérieurs 430a, 430b des deux ressorts 43a, 43b sont ancrés dans les fonds de deux échancrures longitudinales 418a, 418b pratiqués dans les parties formant languettes de la jambe 413a, 413b de la pièce en T, au dessus de l'axe 416a, 416b. Les brins inférieurs 431a, 431b des deux ressorts 43a, 43b sont ancrés autour de deux gorges circulaires aux extrémités d'un cylindre 432a, 432b qui est perpendiculaire au support 2 et solidaire de celui-ci et qui est disposé en dessous de l'axe 416a, 416b. Les deux ressorts 43a, 43b sont symétriques par rapport au support 2 et sont plaqués contre les fonds de deux évidements 100 de forme générale rectangulaire usinés dans les faces externes des flasques 10. Les évidements 100 permettent de conserver la forme parallèl-épipédique générale du boîtier, car les pièces telles que ressorts 43a, 43b, languettes de la jambe 413a, 413b y sont coplanaires et parallèles au plan X'X–Y'Y.

Le second presseur 42a, 42b est disposé entre le premier presseur 41a, 41b et le chant latéral vertical respectif du boîtier 1. Il est monobloc et présente également une partie de préhension 420a, 420b à section longitudinale en T et un pied 421a, 421b. Egalement la tête 422a, 422b de la partie en T surplombe les chants longitudinaux supérieurs des flasques 10, et deux languettes coulissent dans deux rainures borgnes 102a, 102b pratiquées dans les flasques 10. Cependant la jambe et les rainures correspondantes de ce second presseur sont inclinées du haut vers le bas en direction de l'axe vertical Y'Y afin que le chant inférieur plan horizontal 427a, 427b du pied 421a, 421b coulissant entre les parois internes supérieures des flasques 10 tende à pousser l'extrémité 30a, 30b de la fibre respective 3a, 3b contre l'autre, tout en pressant la gaine respective 31a, 31b contre la surface d'appui 22a, 22b. Cette pression est également exercée par deux ressorts en demi-cercle 44a, 44b, analogues aux ressorts 43a, 43b; ils sont plaqués contre le fond des évidements 100 des flasques 10; leurs brins supérieurs 440a, 440b sont ancrés dans des échancrures longitudinales 428a, 428b pratiquées dans les parties formant languettes de la jambe 423a, 423b de la partie en T, et leurs brins inférieurs 441a, 441b sont ancrés autour de deux gorges circulaires aux extrémités d'un cylindre 442a, 442b qui est perpendiculaire au support 2 et solidaire de celui-ci.

Comme montré dans la partie de droite de la Fig. 2 et dans la Fig. 5, le chant inférieur 427a, 427b du pied 421a, 421b présente des saignées transversales 429a, 429b qui, conjointement aux saignées 220a, 220b de la surface crantée d'appui 22a, 22b bloquent en translation et rotation la fibre respective 3a, 3b par faible écrasement de sa gaine 31a, 31b.

La plupart des pièces du dispositif de raccordement sont entièrement en métal, ou en matière plastique, de préférence en une matière dont le coefficient de dilatation est sensiblement égal à celui des fibres optiques, ce qui assure une excellente tenue climatique.

Les Figs. 6A et 6B montrent les moyens pour relever un presseur, par exemple tel que 41a, à l'encontre de la force exercée vers le bas par le ressort respectif 43a en vue d'introduire l'extrémité de la fibre respective dans le boîtier. Ces moyens de relevage de presseur consistent en l'extrémité plate 45 d'un outil en forme d'équerre à chants arrondis, comme montré aus Figs. 6A, 6B et 7. Le coin de l'équerre est introduit incliné et latéralement sous le coin dégagé de la tête 412a du presseur 41a. Puis par appui sur le chant supérieur longitudinal du boîtier, il est basculé vers la verticale afin de coulisser vers le haut le presseur et le maintenir à cette position relevée pendant l'introduction ou le retrait de l'extrémité de la fibre.

La Fig. 8 montre un second type de moyens de relevage de presseur. L'extrémité 46 de l'outil dans ce cas est disposée longitudinalement. Elle bascule dans le plan X'X–Y'Y du boîtier afin de pouvoir manœuvrer le presseur lorsque plusieurs dispositifs de raccordement sont accolés, comme on le verra dans la suite.

On décrit maintenant le raccordement de deux fibres optiques 3a et 3b au moyen du dispositif de raccordement décrit précédemment.

Si la survace périphérique de la gaine à l'extrémité de chaque fibre telle que 3a n'est pas suffisamment concentrique au cœur 30a de la fibre, l'extrémité de la fibre est dégainée afin de réduire les pertes. Par exemple, la gaine est attaquée par un agent chimique décapant approprié qui gonfle la gaine époxy de la fibre et la ramollit; la gaine est ensuite retirée par traction et la fibre est essuyée. Dans le cas contraire où la gaine est concentrique au cœur, les rainures en vé 20a et 20b sont propres à recevoir directement les extrémités gainées des fibres 3a et 3b.

Puis des moyens de coupe spéciaux – n'appartenant pas au cadre de la présente invention – sont utilisés pour obtenir une face extrême qui est exactement perpendiculaire à l'axe de la fibre et qui est exempte de défaut à proximité du cœur de la fibre. La coupe s'effectue à une longueur de la partie dénudée 30a qui est sensiblement égale à la distance entre l'axe Y'Y et le premier dégagement 21a. Par exemple les moyens de coupe comportent un couteau en céramique ou en diamant pour produire une amorce de rupture, puis exercent des tractions opposées de part et d'autre de l'amorce de rupture pour rompre la fibre.

Avant la mise en place des fibres, la partie supérieure du boîtier 1 entre les faces internes des flasques 10 au dessus du support central 2 est rempli par un produit 24 tel qu'une huile ou graisse silicone ou de préférence tel qu'un gel silicone. Le gel silicone a une dureté suffisamment faible pour permettre l'introduction et la mise en place des extrémités des fibres sans aucune difficulté. Le gel ne coule pas sous son propre poids; après injection dans le boîtier, le gel ne s'échappe pas par les ouvertures du boîtier.

Au moyen de deux outils, tels que 45 (Fig. 7) ou 46 (Fig. 8), les deux presseurs 41a et 42a sont relevés et maintenus à ces positions relevées en laissant les outils en place.

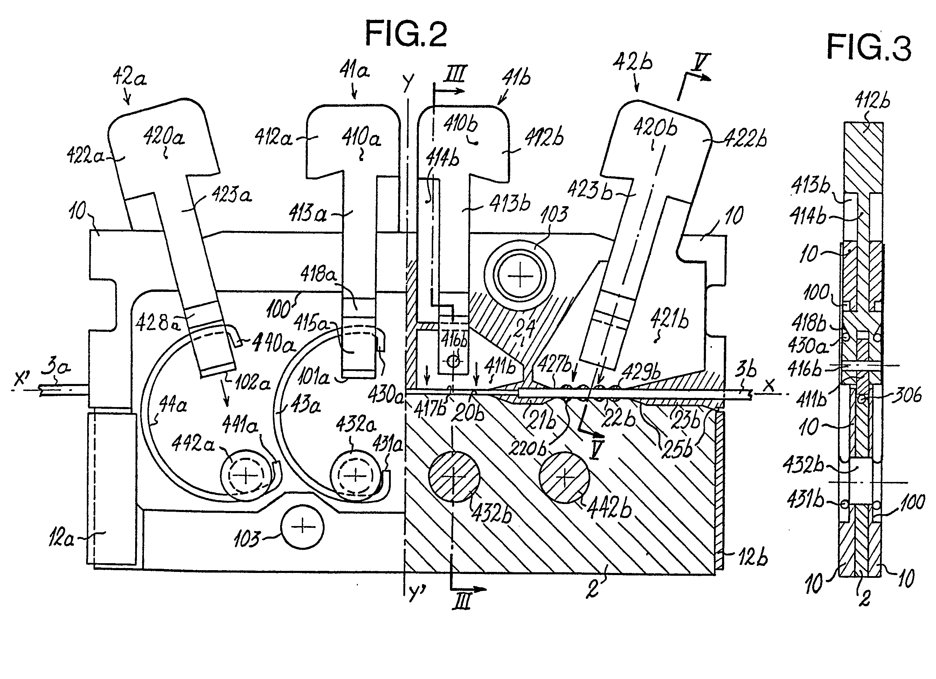

Une pince spéciale, telle que celle 47 montrée aux Figs. 9 et 10, saisit la fibre gainée 3a à une distance L de son extrémité coupée. La distance L est égale à la moitié de la longueur du boîtier 1 suivant l'axe X'X. Elle est obtenue au moyen d'un calibre 48 sont une encoche en dièdre droit 480 a un côté ayant une longueur égale à L. L'application de l'extrémité coupée de la fibre contre l'autre côté de l'encoche et de l'extrémité de la pince 47 contre le bord correspondant de l'encoche permet de saisir la fibre à la distance L. L'extrémité de la fibre est ensuite introduite dans le boîtier le long du support central 2 et à travers le gel 24. La pince 47 bute contre le chant latéral respectif du boîtier afin que l'extrémité coupée de la fibre soit dans le plan de jonction défini par l'axe Y'Y. Le retrait des deux outils, tels que 45 ou 46, libèrent successivement les presseurs 41a et 42a qui descendent sous l'action des ressorts 43a et 44a pour plaquer la fibre 3a sur le chant supérieur 20a–22a du support central 2. La pince 47 est ensuite retirée.

La seconde fibre 3b est coupée et mise en place dans l'autre moitié du boîtier 1 de la même façon, à l'exception que le calibre 48 n'est pas utilisé. Le calibre est remplacé par le boîtier lui-même en poussant l'extrémité de la fibre 3b contre celle de la fibre 3a déjà en place dans le boîtier et en la maintenant à cette position par la pince 47.

Lors de l'introduction des fibres 3a et 3b, le gel silicone 24 est automatiquement intercalé entre les deux extrémités des fibres. L'indice de réfraction du gel silicone a pratiquement la même valeur que celui des fibres ce qui réalise une jonction sans discontinuité d'indice de réfraction.

Le gel silicone 24 est également auto-nettoyant, propriété que ne possède pas une huile ou graisse silicone. Si une poussière est malencontreusement recueillie par la face de l'extrémité d'une fibre avant son introduction dans le boîtier, alors le gel, grâce à son pouvoir d'adhésion, essuie l'extrémité de la fibre lors de son introduction dans le boîtier et donc dans le gel, et retient la poussière.

Une autre caractéristique de gel silicone 24 consiste en une «auto-cicatrisation» lorsque les fibres sont retirées du boîtier. La cohésion du gel est plus forte que l'adhésion du gel sur la surface des fibres. Lors du retrait des fibres plongées et entourées intimement dans le gel, le gel se referme dans l'espace créé par le retrait et les fibres ne gardent aucune trace du gel. Le gel n'est pas entraîné vers l'extérieur par les fibres.

Suivant une variante sensiblement analogue au mode de réalisation décrit précédemment, le boîtier du dispositif de raccordement ne comprend que deux flasques longitudinaux qui sont plaqués l'un contre l'autre suivant le plan médian longitudinal vertical selon la Fig. 3. Le support central 2 est supprimé et remplacé par deux parties symétriques qui, lorsque les flasques sont accolés, forment ensemble une structure analogue au support 2 selon le mode de réalisation précédent. Dans ce cas, une moitié de l'ensemble pour l'alignement des fibres 3a et 3b qui est formé par les rainures en vé 20a et 20b, les premiers dégagements 21a et 21b, les surfaces d'appui 22a et 22b et les seconds dégagements 23a et 23b, par rapport au plan médian longitudinal susdit est pratiquée dans chacun des flasques. Ce dernier ensemble pour l'alignement des fibres peut être obtenu par l'accolement de deux demi-rainures qui, après assemblages des flasques, définissent un conduit destiné à l'introduction, au guidage et à l'alignement des extrémités des fibres. Le tronçon du conduit notamment au niveau des rainures 20a et 20b peut avoir une section carrée ou losangique. Le coin inférieur de cette section constitue l'assise en vé.

L'avantage de cette variante est de réduire principalement les coûts de fabrication du dispositif de raccordement. En effet chaque moitié du conduit d'alignement des fibres peut être exécutée facilement par moulage ou estampage notamment.

Des dispositifs de raccordement élémentaires tels que celui décrits précédemment peuvent être accolés les uns sur les autres pour raccorder les fibres optiques d'un câble à celles d'un autre câble.

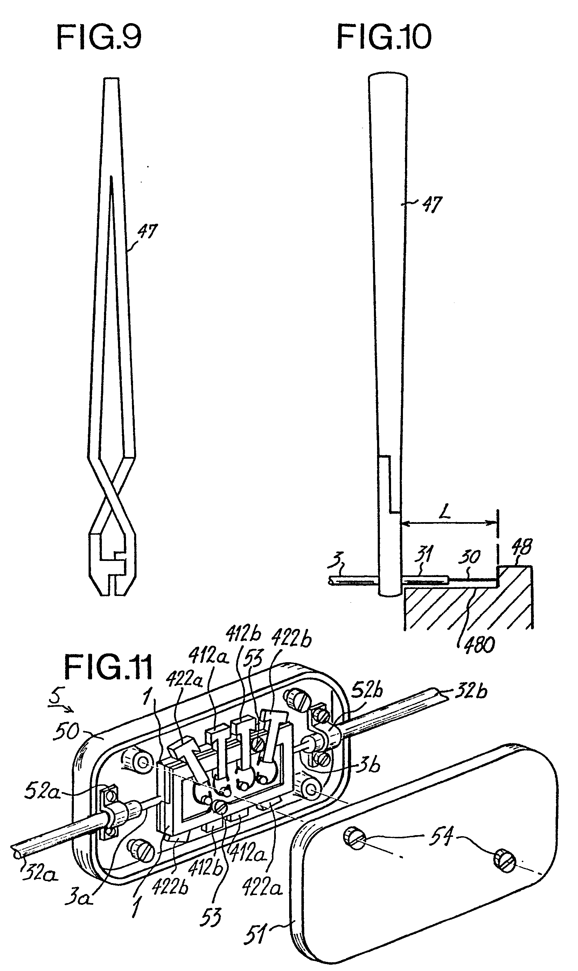

La Fig. 11 montre un dispositif pour raccorder deux câbles 32a et 32b ayant chacun deux fibres optiques 3a, 3b. Il comprend une boîte parallélépipédique creuse 5 composée d'un fond 50 et d'un couvercle 51. Aux extrémités de l'axe longitudinal du fond sont ancrées les extrémités gainées des câbles par deux demi-colliers 52a, 52b, fixés par vis sur la paroi interne du fond 50. Au centre du fond 50 sont fixés deux boîtiers de raccordement 1 au moyen de deux vis 53 traversant des trous 103 (Fig. 2) pratiqués dans les pourtours des flasques 10. Les boîtiers 1 raccordant chacun une fibre optique 3a du câble 32a à une fibre optique 3b de l'autre câble 32b sont disposés tête-bêche afin d'accéder aisément aux têtes 412a, 412b, 422a, 422b des presseurs au moyen d'un outil de relevage tel que 45 (Fig. 7). Après raccordement, le boîtier 5 est fermé en appliquant le couvercle 51 sur le fond 50 et en l'y fixant par quatre vis 54.

Les Figs. 12 à 14 montrent un dispositif de raccordement multifibre 6 dans lequel des dispositifs de raccordement élémentaires tels que celui décrit précédemment peuvent être superposés les uns au-dessus des autres. Le dispositif multifibre permet par exemple de raccorder une nappe de fibres optiques à une autre nappe, chaque nappe pouvant être issue d'un câble dans lequel les fibres optiques sont réparties en une ou plusieurs nappes ou autour d'un ou plusieurs joncs cylindriques, le tout formant un câble composite. Le dispositif multifibre 6 comprend une plaque support 60 et une pluralité de cloisons 61.

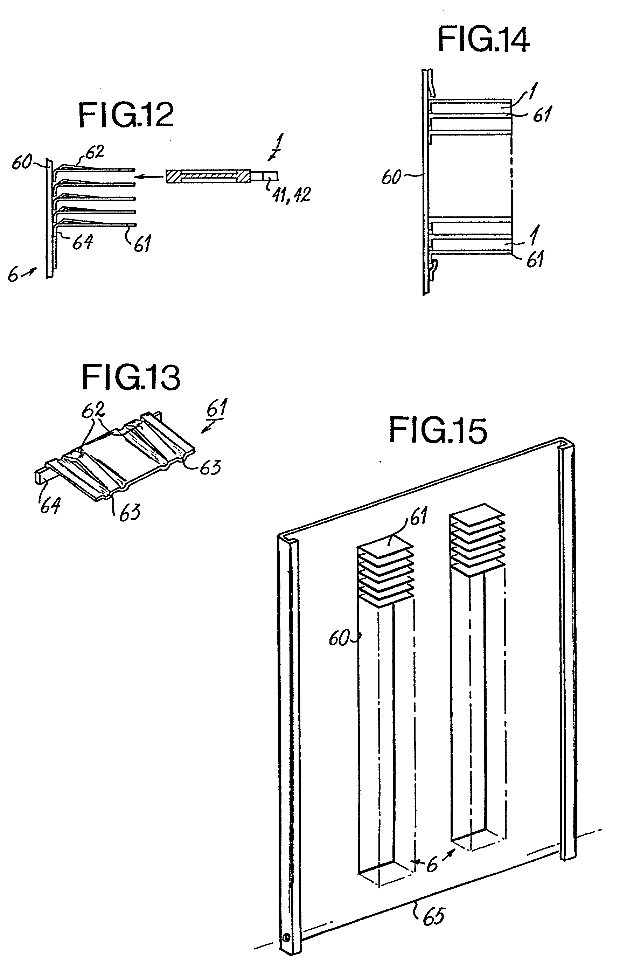

Chaque cloison 61 telle qu'illustrée à la Fig. 13 est obtenue par pliage et découpage d'une plaque rectangulaire. Elle comporte deux languettes transversalles flexibles, légèrement pliées 62 qui sont saillantes sur une face de la cloison, deux paires de languettes transversales semi-circulaires flexibles 63 qui sont de part et d'autre des languettes 62 et qui sont saillantes sur l'autre face de la cloison, et une languette longitudinale 64 à la base de la cloison et obtenue par pliage à angle droit. Les dimensions d'une cloison sont du même ordre de grandeur que celles des grandes faces du boîtier 1.

Comme montré à la Fig. 12, le support 60 est une plaque rectangulaire disposée verticalement sur une face de laquelle les cloisons 61 sont empilées perpendiculairement les unes au-dessus des autres. La languette longitudinale 64 de chaque cloison peut être soudée sur le support 60, ou pincée dans une rainure du support 60 obtenue par découpe et emboutissage, ou fixée par tout autre moyen connu sur le support 60.

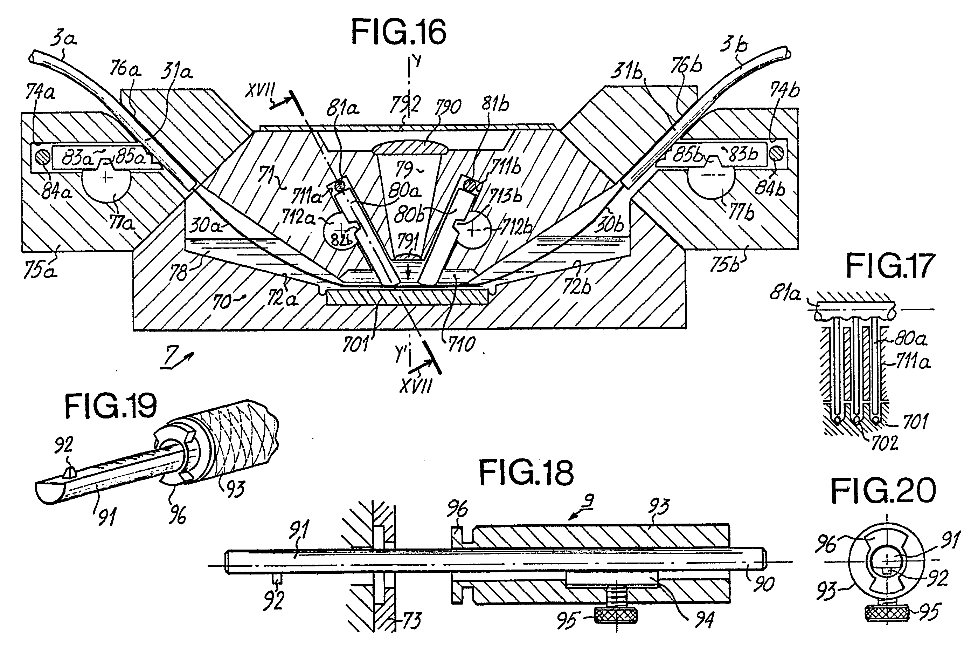

Chaque boîtier 1 est présenté horizontalement et s'enfiche entre deux cloisons voisines 61 comme montré aux Figs. 12 et 14. Les deux languettes flexibles 62 de la cloison inférieure s'appuient contre la surface de l'évidement externe 100 de l'un des flasques 10 du boîtier 1. Les quatre languettes semi-circulaires 63 de la cloison supérieure s'appuient contre la surface de l'évidement externe 100 de l'autre flasque 10 du boîtier 1. Le boîtier 1 est ainsi entretoisé et verrouillé par les deux cloisons voisines 61. Son chant longitudinal du côté du support central 2 est enfoncé à fond contre la languette 64 de la cloison supérieure et le support 60. Les têtes 412 et 422 des ses presseurs 41 et 42 dépassent de l'ensemble des cloisons et peuvent être relevées au moyen d'un outil tel que 46 (Fig. 8).

La Fig. 15 montre schématiquement plusieurs supports 60 dont les cloisons 61 sont propres à recevoir entre elles des boîtiers 1. Les supports 60 sont disposés parallèlement en colonnes sur un bâti 65. Cet ensemble peut constituer un répartiteur ou sous-répartiteur pour central téléphonique. Un bôitier 1 joue le rôle d'une tête de câble qui raccorde une fibre optique d'un câble externe à une fibre optique constituant une jarretière, ou d'une réglette qui raccorde une fibre optique constituant une jarretière à une fibre optique d'un câble interne desservant l'autocommutateur du central.

Les Figs. 16 et 17 illustrent un second mode de réalisation d'un dispositif de raccordement multifibres. Il comprend essentiellement un boîtier 7 à section longitudinale trapézoïdale qui est composé d'une embasse 70 et d'un couvercle 71 solidaires et qui est symétrique par rapport au petit axe transversal vertical Y'Y définissant le plan de jonction des extrémités des fibres.

Au centre de l'embase 70 est fixé un support central plan 701 dans la face supérieure ménagées des rainures longitudinales profondes à fond en vé 702. Chaque rainure 702 a une largeur sensiblement supérieure au diamètre de l'extrémité dégainée d'une fibre optique. Deux conduits latéraux symétriques 72a et 72b sont pratiqués sensiblement pour moitié dans l'embasse 70 et pour moitié dans le couvercle 71 et prolongent chacun vers le haut l'une des extrémités de la rainure 702 pour déboucher vers l'extérieur du boîtier 7. La hauteur des conduits 72a et 72b est nettement plus grande que le diamètre d'une fibre, tandis que leur largeur est sensiblement supérieure au diamètre de l'extrémité dégainée d'une fibre optique.

Au dessus du support rainuré central 701, la face inférieure du couvercle 71 présente une cavité 710 dans laquelle débouche des paires de premiers presseurs plats 80a et 80b respectivement alignés avec les rainures 702. Les presseurs 80a et 80b au dessus d'une rainure coulissent dans deux rainures borgnes 711a et 711b dans le courvercle 71 qui sont inclinées symétriquement par rapport à l'axe Y'Y et convergent vers le support 701 en dessous. L'extrémité supérieure de chaque presseur 80a, 80b est poussée vers le bas par un moyen élastique afin que l'extrémité inférieure sensiblement arrondie du presseur coulisse dans le haut de la rainure en vé correspondante 702 et presse suivant deux génératrices l'extrémité dégainée de la fibre optique 3a, 3b dans le fond en vé de la rainure. Ce moyen élastique est par exemple un cylindre transversal en caoutchouc 81a, 81b collé au fond des rainures 711a, 711b d'un même côté par rapport à l'axe Y'Y.

Les presseurs 80a, 80b d'un même côté par rapport à l'axe Y'Y ont également en commun un trou cylindrique 712a, 712b qui traverse tranversalement le couvercle 71. Un secteur du trou 712a, 712b est tronqué pour déboucher dans les rainures borgnes respectives 711a, 711b au niveau de leur chant incliné opposé à l'axe Y'Y. Au milieu de la corde du secteur tronqué est prévue une petite rainure transversale 713a, 713b qui est alignée avec des entailles formant crans 82a, 82b prévues sur les chants inclinés des presseurs 80a, 80b opposés à l'axe Y'Y lorsque ceux-ci sont en position basse pour presser les fibres respectives 3a, 3b. Le trou cylindrique rainuré 712a–713a, 712b–713b et les crans 82a, 82b des presseurs sont destinés à coopérer avec l'extrémité d'un outil de relevage des presseurs pour l'introduction ou le retrait sélectif des fibres.

Cet outil de relevage 9 est décrit ci-après en référence aux Figs. 18 à 20. L'outil 9 comporte une tige cylindrique 90 dont une extémité 91 a une section analogue aux trous 712a et 712b. Le méplat de l'extrémité 91 comporte un ergot pyramidal radial 92 dont la section est analogue à celle des rainures 713a et 713b et des crans 82a et 82b. Ainsi l'extrémité 91 peut coulisser dans un trou rainuré 712a–713a, 712b–713b et l'ergot 92 peut s'encastrer dans le cran 82a, 82b d'un presseur en vue du relevage de celui-ci par rotation axiale de la tige 90 à l'encontre de la poussée exercé par le cylindre élastique 81a, 81b.

Afin de sélectionner le presseur sous lequel une fibre doit être introduite ou retirée, l'outil 9 comporte une poignée cylindrique creuse 93 qui est montée à coulissement axial sur l'autre extrémité de la tige 90, par exemple au moyen d'une clavette libre 94. Une vis de réglage à tête moletée 95 est vissée radialement sur la poignée 93 et applique la clavette 94 sur la tige 90 pour bloquer en translation la poignée à la position désirée sur la tige. Cette position est choisie en fonction de celle du presseur à relever dans le boîtier. Pour ce faire, des repères montrés à la Fig. 19 sont indiqués sur le méplat de la tige 90 entre l'ergot 92 et la poignée 93, et l'une des faces longitudinales verticales 73 du boîtier 1 sert de surface de référence pour appliquer une extrémité 96 de la poignée en correspondance au repère sélectionné, comme montré à la Fig. 18.

L'extrémité 96 de la poignée et la face de référence 73 du boîtier devant chaque trou 712a, 712b forment un assemblage à collerette contenue ayant deux secteurs en oreille diamétralement opposés et à alésage complémentaire contenant. Les angles des secteurs sont différents entre eux et sont disposés différemment devant les trous 712a et 712b afin que les deux alésages servent à verrouiller la poignée mais également de détrompeur.

Le dispositif de raccordement selon ce second mode de réalisation comprend également deux seconds presseurs 83a et 83b pour presser les gaines 31a et 31b de chaque paire de fibres à raccorder 3a et 3b. Comme montré à la Fig. 16, les seconds presseurs 83a, 83b d'un même côté de l'axe Y'Y sont montés à coulissement dans des rainures longitudinales 74a, 74b d'un boîtier composite 75a, 75b fixé sur l'un des côtés du boîtier central 7. Les extrémités gainées des fibres optiques sont disposées dans des rainures inclinées 76a, 76b prolongeant les conduits respectifs 72a, 72b.

Les seconds presseurs 83a, 83b d'un boîtier latéral 75a, 75b sont associés en commun, comme les premiers presseurs 80a, 80b, à un cylindre transversal 84a, 84b ainsi qu'à un trou cylindrique tronqué rainuré 77a, 77b. Les seconds presseurs 83a, 83b comportent également chacun un cran 85a, 85b pour coopérer avec l'ergot 92 de la tige 90 lors de son coulissement dans le trou correspondant 77a, 77b. L'extrémité des seconds presseurs en contact avec les gaines des fibres est également crantée comme celles 427 des presseurs 42 (Fig. 2).

Le raccordement des fibres 3a, 3b deux à deux fait appel à un procédé analogue à celui décrit précédemment. Le boîtier central 7 contient également un gel silicone 78 qui remplit la cavité 710 au dessus du support central 701 et les rainures 702 ainsi que partiellement les conduits 72a, 72b.

Le dispositif montré à la Fig. 16 comprend en outre un système optique grossissant 79 pour observer et contrôler l'aboutement des fibres optiques. Le système 79 est constitué par deux petites lentilles classiques 790 et 791 qui ont leur axe optique aligné avec le plan transversal défini par l'axe Y'Y et qui surplombent verticalement les milieux des rainures 702 et donc les jonctions des fibres entre les deux jeux de premiers presseurs 80a et 80b, à travers le gel silicone transparent 78. La partie supérieure du système optique est protégée par un capot transparent 792 fixé sur le dessus du couvercle 71.

**Revendications**

1. Dispositif de raccordement des extrémités de deux fibres optiques, comprenant un boîtier (1) contenant un moyen de support de fibres (2) ayant une rainure centrale (20) pour recevoir les extrémités (30a, 30b) des fibres (3a, 3b) et des surfaces d'appui (22a, 22b) des gaines des fibres de part et d'autre de la rainure, des premiers moyens (41a, 41b) pour presser les extrémités (30a, 30b) des fibres dans la rainure (20) et des seconds moyens (42a, 42b) pour presser les gaines (31a, 31b) des fibres sur les surfaces d'appui (22a, 22b), caractérisé en ce que les premiers et seconds moyens de pressage (41a, 41b, 42a, 42b) sont montés coulissants dans le boîtier (1) au dessus de moyen de support (2) et sont rappelés contre le moyen de support (2) par des moyens élastiques (43a, 43b, 44a, 44b).

2. Dispositif conforme à la revendication 1, caractérisé en ce que la direction de coulissement des premiers moyens de pressage (41a, 41b) est perpendiculaire à la rainure (20).

3. Dispositif conforme à la revendication 1, caractérisé en ce que la direction de coulissement des premiers moyens de pressage (80a, 80b) est inclinée par rapport à la rainure (702) en direction de la jonction (Y'Y) des fibres.

4. Dispositif conforme à l'une des revendications 1 à 3, caractérisé en ce que la direction de coulissement des seconds moyens de pressage (42a, 42b; 83a, 83b) est inclinée par rapport aux surfaces d'appui (22a, 22b; 76a, 76b) en direction de la jonction (Y'Y) des fibres.

5. Dispositif conforme à l'une des revendications 1 à 4, caractérisé en ce que les extrémités (427a, 427b) des seconds moyens de pressage (42a, 42b) qui sont au contact avec les gaines (31a, 31b) des fibres, et/ou les surfaces d'appui (22a, 22b) sont crantées.

6. Dispositif conforme à l'une des revendications 1 à 5, caractérisé en ce que les extrémités (411a, 411b) des premiers moyens de pressage (41a, 41b) au contact des extrémités (30a, 30b) des fibres sont rotatives autour d'axes (416a, 416b) perpendiculaires à la direction de coulissement (Y'Y) des premiers moyens de pressage et à la direction (X'X) de la rainure (20).

7. Dispositif conforme à l'une des revendications 1 à 6, caractérisé en ce que le moyen élastique de rappel d'un moyen de pressage (41; 42) est au moins un ressort (43; 44) ayant une extrémité (430; 440) ancrée au moyen de pressage et une autre extrémité (431; 441) ancrée au moyen de support (2; 432; 442).

8. Dispositif conforme à l'une des revendications 1 à 6, caractérisé en ce que le moyen élastique de rappel d'un moyen de pressage (80; 83) est une pièce en matière élastique (81; 84) encastrée dans la rainure (711; 74) de coulissement du moyen de pressage.

9. Dispositif conforme à l'une des revendications 1 à 8, caractérisé en ce qu'un moyen de pressage (41; 42) comporte une tête (412; 422) saillante au-dessus du boîtier (1) et possédant une entaille pour introduire entre celle-ci et le boîtier l'extrémité d'un outil de relevage (45; 46).

10. Dispositif conforme à la revendication 9, caractérisé en ce que l'extrémité de l'outil de relevage (45) est introduite perpendiculairement à la rainure (20).

11. Dispositif conforme à la revendication 9, caractérisé en ce que l'extrémité de l'outil de relevage (46) est introduite coplanairement à la rainure (20).

12. Dispositif conforme à l'une des revendications 1 à 8, caractérisé en ce qu'un moyen de pressage (80; 83) est complètement contenu dans le boîtier (7) et comprend un cran latéral (82; 85) et en ce qu'un trou cylindrique tronqué axialement (712; 77) débouchant dans la rainure de coulissement (711; 74) du moyen de pressage et rainuré dans le prolongement du cran est pratiqué dans le boîtier (7) pour recevoir l'extrémité cylindrique (91) à méplat et à ergot complémentaire (92) du cran, d'un outil de relevage (9) du moyen de pressage.

13. Dispositif conforme à l'une des revendications 1 à 12, caractérisé en ce qu'entre la rainure (20) et les surfaces d'appui (22a, 22b) sont ménagés des premiers dégagements (21a, 21b) dans le moyen de support (2).

14. Dispositif conforme à l'une des revendications 1 à 13, caractérisé en ce que les extrémités (30a, 30b) des fibres (3a, 3b) pressées par les premiers moyens de pressage (41a, 41b) dans la rainure (20) sont dégainées.

15. Dispositif conforme à l'une des revendications 1 à 14, caractérisé en ce que les surfaces d'appui (22a, 22b) sont suivies de seconds dégagements (23a, 23b) débouchant vers l'extérieur du boîtier (1) et formant les orifices d'entrée des fibres (3a, 3b) dans le boîtier.

16. Dispositif conforme à l'une des revendications 1 à 15, caractérisé en ce que le boîtier (1) comprend deux flasques (10) dont les parties inférieures entretoisent le moyen de support (2) et dont les parties supérieures entretoisent à coulissement les moyens de pressage (41, 42).

17. Dispositif conforme à l'une des revendications 1 à 15, caractérisé en ce que le boîtier (1) comprend deux flasques (10) plaqués l'un contre l'autre dont les parties inférieures venues de moulage, d'estampage ou analogue, forment chacune une moitié du moyen de support (2) par rapport au plan longitudinal médian de la rainure (20) et des surfaces d'appui (22a, 22b) et dont les parties supérieures entretoisent à coulissement les moyens de pressage (41, 42).

18. Dispositif conforme à l'une des revendications 1 à 17, dans lequel un gel remplit le boîtier (1; 7) au-dessus du moyen de support (2), caractérisé en ce que le gel (24; 78) ne coule pas par son propre poids et ne s'échappe pas par les ouvertures du boîtier.

19. Dispositif conforme à la revendication 18, caractérisé en ce que le gel (24; 78) n'est pas entraîné vers l'extérieur du boîtier (1; 7) lors du retrait des fibres (3) du boîtier.

20. Dispositif conforme à la revendication 18 ou 19, caractérisé en ce que le gel (24; 78) est auto-nettoyant des extrémités des fibres (3).

21. Dispositif conforme à l'une des revendications 1 à 20, caractérisé en ce qu'il comprend un système optique grossisant (79) encastré dans le boîtier (7) au-dessus de la jonction (Y'Y) des fibres (3) dans la rainure (702) du moyen de support (701, 70) pour observer l'introduction des fibres.

22. Dispositif de raccordement de deux ensembles de fibres optiques deux à deux, caractérisé en ce qu'il est formé par l'empilement de boîtiers (1; 7) conformes à l'une des revendications 1 à 21.

23. Dispositif (6) conforme à la revendication 22, caractérisé en ce qu'il comprend un support plan (60) supportant des cloisons parallèles (61), de préférence amovibles, entre lesquelles s'enfichent les boîtiers (1).

24. Dispositif conforme à la revendication 23, caractérisé en ce que chaque cloison (61) comporte des languettes (62), bossages (63) ou analogues flexibles pour verrouiller les boîtiers adjacents (1).

25. Dispositif conforme à l'une des revendications 22 à 24, caractérisé en ce que deux boîtiers adjacents (Fig. 11) sont disposés tête-bêche.

## Patentansprüche

1. Vorrichtung zum Verbinden der Enden von zwei otpischen Fasern, bestehend aus einem Gehäuse (1), enthaltend eine Faserstützvorrichtung (2) mit einer zentralen Nut (20) zur Aufnahme der Enden der Fasern (3a, 3b), und Stützflächen (22a, 22b) für die Faserhüllen beiderseits der Nut, erste Vorrichtungen (41a, 41b) zum Andrücken der Enden (30a, 30b) der Fasern in die Nut (20) und zweite Vorrichtungen (42a, 42b) zum Andrücken der Hüllen (31a, 31b) an die Stützflächen (22a, 22b), dadurch gekennzeichnet, dass die ersten und zweiten Vorrichtungen zum Andrücken (41a, 41b, 42a, 42b) gleitend an dem Gehäuse (1) über der Stützvorrichtung (2) montiert sind und durch elastische Mittel (43a, 43b, 44a, 44b) gegen die Stützvorrichtung (2) zurückschnappbar angeordnet sind.

2. Vorrichtung nach Anspruch 1, dadurch gekennzeichnet, dass die Richtung der Gleitbewegung der ersten Vorrichtung zum Andrücken (41a, 41b) senkrecht zur Nut (20) ist.

3. Vorrichtung nach Anspruch 1, dadurch gekennzeichnet, dass die Richtung der Gleitbewegung der ersten Vorrichtung zum Andrücken (80a, 80b) gegenüber der Nut (702) in Richtung der Verbindung (Y'Y) der Fasern geneigt ist.

4. Vorrichtung nach einem der Ansprüche 1 bis 3, dadurch gekennzeichnet, dass die Richtung der Gleitbewegung der zweiten Vorrichtung zum Andrücken (42a, 42b; 83a, 83b) gegenüber den Stützflächen (22a, 22b; 76a, 76b) in Richtung der Verbindung (Y'Y) der Fasern geneigt ist.

5. Vorrichtung nach einem der Ansprüche 1 bis 4, dadurch gekennzeichnet, dass die Enden (427a, 427b) der zweiten Vorrichtung zum Andrücken (42a, 42b), die im Kontakt mit der Hülle (31a, 31b) der Fasern und/oder der Stützfläche (22a, 22b) sind, verzahnt sind.

6. Vorrichtung nach einem der Ansprüche 1 bis 5, dadurch gekennzeichnet, dass die Enden (411a, 411b) der ersten Vorrichtung zum Andrücken (41a, 41b) im Kontakt mit den Enden (30a, 30b) der Fasern um Achsen (416a, 416b), die senkrecht stehen zur Gleitbewegungsrichtung (Y'Y) der ersten Vorrichtung zum Andrücken und zur Richtung (X'X) der Nut (20), drehbar sind.

7. Vorrichtung nach einem der Ansprüche 1 bis 6, dadurch gekennzeichnet, dass die elastische Rückholvorrichtung der einen Vorrichtung zum Andrücken (41, 42) aus mindestens einer Feder (43; 44) besteht, deren eines Ende (430; 440) durch eine Druckvorrichtung und deren anderes Ende (431; 441) durch eine Stützvorrichtung (2; 432; 442) verankert ist.

8. Vorrichtung nach einem der Ansprüche 1 bis 6, dadurch gekennzeichnet, dass die elastische Rückholvorrichtung der einen Vorrichtung zum Andrüchen (80; 83) aus einem Stück eines elastischen Stoffes (81; 84) besteht, das in der Gleitnut (711; 74) der Vorrichtung zum Andrücken eingelassen ist.

9. Vorrichtung nach einem der Ansprüche 1 bis 8, dadurch gekennzeichnet, dass eine Vorrichtung zum Andrücken (41; 42) einen Kopf (412; 422) trägt, der oben aus dem Gehäuse (1) herausragt und einen Ausschnitt aufweist, zwischen den und das Gehäuse das Ende eines Hebewerkzeugs (45; 46) eingeführt werden kann.

10. Vorrichtung nach Anspruch 9, dadurch gekennzeichnet, dass das Ende des Hebewerkzeugs (45) senkrecht zur Nut (20) eingeführt wird.

11. Vorrichtung nach Anspruch 9, dadurch gekennzeichnet, dass das Ende des Hebewerkzeugs (46) koplanar zur Nut (20) eingeführt wird.

12. Vorrichtung nach einem der Ansprüche 1 bis 8, dadurch gekennzeichnet, dass die Vorrichtung zum Andrücken (80; 83) vollständig im Gehäuse (7) enthalten ist und eine seitliche Kerbe (82; 85) enthält und dass sich ein axial abgestumpftes Loch (712; 77) in die Verschiebenut (711; 74) der Vorrichtung zum Andrücken öffnet und die Nut in der Verlängerung der Kerbe in dem Gehäuse (7) angeordnet ist und das halbflache zylindrische Ende (91) und die zusätzliche Nase (92) der Kerbe eines Hebewerkzeuges (9) der Vorrichtung zum Andrücken aufnimmt.

13. Vorrichtung nach einem der Ansprüche 1 bis 12, dadurch gekennzeichnet, dass zwischen der Nut (20) und den Stützflächen (22a, 22b) erste Auskuppeleinrichtungen (21a, 21b) auf der Stützvorrichtung befestigt sind.

14. Vorrichtung nach einem der Ansprüche 1 bis 13, dadurch gekennzeichnet, dass die Enden (30a, 30b) der Fasern (3a, 3b), die durch die erste Vorrichtung zum Andrücken (41a, 41b) an die Nut (20) gedrückt werden, ohne Hülle sind.

15. Vorrichtung nach einem der Ansprüche 1 bis 14, dadurch gekennzeichnet, dass die Stützflächen (22a, 22b) mit zweiten Auskuppeleinrichtungen (23a, 23b) verbunden sind, die in das Innere des Gehäuses (1) einmünden und Öffnungen (3a, 3b) zum Einführen der Fasern in das Gehäuse bilden.

16. Vorrichtung nach einem der Ansprüche 1 bis 15, dadurch gekennzeichnet, dass das Gehäuse (1) zwei Flansche (10) enthält, deren untere Teile die Stützvorrichtung (2) und deren obere Teile die Gleitführung der Vorrichtung zum Andrücken (41, 42) verstärken.

17. Vorrichtung nach einem der Ansprüche 1 bis 15, dadurch gekennzeichnet, dass das Gehäuse (1) aneinander zwei Flansche (10) enthält, deren untere Teile durch Giessen, Stanzen oder dergleichen hergestellt worden sind, von denen jede eine Hälfte der Stützvorrichtung (20) bezüglich der mittleren Längsebene der Nut (20) und der Stützflächen (22a, 22b) bilden, und deren obere Teile die Gleitfläche der Vorrichtung zum Andrücken (41, 42) verstärkt.

18. Vorrichtung nach einem der Ansprüche 1 bis 17, in welcher das Gehäuse (1; 7) über der Stützvorrichtung (2) durch ein Gel ausgefüllt wird, dadurch gekennzeichnet, dass das Gel (24; 78) nicht durch sein eigenes Gewicht fliesst und nicht aus den Öffnungen des Gehäuses austritt.

19. Vorrichtung nach Anspruch 18, dadurch gekennzeichnet, dass das Gel (24; 78) beim Austritt der Fasern (3) aus dem Gehäuse nicht mitgerissen wird.

20. Vorrichtung nach den Ansprüchen 18 oder 19, dadurch gekennzeichnet, dass das Gel (24; 78) gegenüber den Enden der Fasern (3) Netzwirkung aufweist.

21. Vorrichtung nach einem der Ansprüche 1 bis 20, dadurch gekennzeichnet, dass sie ein optisches Vergrösserungssystem (79) im Gehäuse (7) über der Verbindung (Y'Y) der Fasern (3) in der Nut (702) der Stützvorrichtung (701, 70) enthält, um die Einführung der Fasern zu beobachten.

22. Vorrichtung zum Verbinden von zwei Einheiten von optischen Fasern aneinander, dadurch gekennzeichnet, dass zwei Gehäuse (1; 7) nach den Ansprüchen 1 bis 21 übereinander angeordnet werden.

23. Vorrichtung (6) nach Anspruch 22, dadurch gekennzeichnet, dass sie eine Stützebene (60) enthält, die parallele Zwischenwände (61) trägt, die vorzugsweise abnehmbar sind, zwischen die die Gehäuse (1) eingeschoben werden.

24. Vorrichtung nach Anspruch 23, dadurch gekennzeichnet, dass jede Zwischenwand (61) Federn (62), Ausbiegungen (63) oder ähnliche flexible Elemente trägt, um die anliegenden Gehäuse (1) zu fixieren.

25. Vorrichtung nach einem der Ansprüche 22 bis 24, dadurch gekennzeichnet, dass zwei angrenzende Gehäuse (Fig. 11) seitenverkehrt angeordnet sind.

**Claims**

1. Device for connecting ends of two optical fibres, comprising a housing (1) including a fiber supporting means (2) having a central groove (20) for receiving the ends (30a, 30b) of the fibers (3a, 3b) and surfaces (22a, 22b) on either side of the groove for bearing claddings of the fibers, first means (41a, 41b) for pressing the fiber ends (30a, 30b) into the groove (20) and second means (42a, 42b) for pressing the fiber claddings (31a, 31b) onto the bearing surfaces (22a, 22b), characterized in that the first and second pressing means (41a, 41b, 42a, 42b) are slidably mounted in the housing (1) above the supporting means (2) and are pulled to the supporting means (2) by spring means (43a, 43b, 44a, 44b).

2. Device according to claim 1, characterized in that the sliding direction of the first pressing means (41a, 41b) is perpendicular to the groove (20).

3. Device according to claim 1, characterized in that the sliding direction of the first pressing means (80a, 80b) is inclined with respect to the groove (702) toward the junction (Y'Y) of the fibers.

4. Device according to one of claims 1 to 3, characterized in that the sliding directions of the second pressing means (42a, 42b; 83a, 83b) is inclined with respect to the bearing surfaces (22a, 22b; 76a, 76b) toward the junction (Y'Y) of the fibers.

5. Device according to one of claims 1 to 4, characterized in that the ends (427a, 427b) of the second pressing means (42a, 42b) in contact with the fiber claddings (31a, 31b) and/or the bearing surfaces (22a, 22b) are notched.

6. Device according to one of the claims 1 to 5, characterized in that the ends (411a, 411b) of the first pressing means (41a, 41b) in contact with the fiber ends (30a, 30b) are rotatably mounted about axles (416a, 416b) perpendicularly to the sliding direction (Y'Y) of the first pressing means and the direction (X'X) of the groove (20).

7. Device according to one of claims 1 to 6, characterized in that the pulling spring means (41; 42) is at least a spring (43; 44) having an end (430; 440) anchored to the pressing means and another end (431; 441) anchored to the supporting means (2; 432; 442).

8. Device according to one of claims 1 to 6, characterized in that the pulling spring means of a pressing means (80; 83) is a member of elastic material (81; 84) embedded in the sliding groove (711; 74) of the pressing means.

9. Device according to one of claims 1 to 8, characterized in that a pressing means (41; 42) comprises a head protruding above the housing (1) and having a notch to introduce between this one and the housing the end of a raising tool (45; 46).

10. Device according to claim 9, characterized in that the rainsing tool end (46) is introduced perpendicularly to the groove (20).

11. Device according to claim 9, characterized in that the raising tool end (46) is introduced coplanarly to the groove (20).

12. Device according to one of claims 1 to 8, characterized in that a pressing means (80; 83) is completely contained in the housing (7) and comprises a lateral slot (82; 85) and in that an axially truncated cylindrical hole (712; 77) giving into the pressing means sliding groove (711; 74) and grooved in the prolongation of the slot is made in the housing (7) to receive the cylindrical end (91) of a pressing means raising tool (9) having a half-flat and a snug (92) complementary to the slot.

13. Device according to one of claims 1 to 12, characterized in that first recesses (21a, 21b) are arranged in the supporting means (2) between the groove (20) and the bearing surfaces (22a, 22b).

14. Device according to one of claims 1 to 13, characterized in that the ends (30a, 30b) of the fibers (3a, 3b) pressed by the first pressing means (41a, 41b) into the groove (20) are uncladded.

15. Device according to one of claims 1 to 14, characterized in that second recesses (23a, 23b) giving out of the housing (1) and forming the inlet orifices of the fibers (3a, 3b) in the housing come after the bearing surfaces (22a, 22b).

16. Device according to one of claims 1 to 15, characterized in that the housing (1) comprises two plates (10) whose lower parts embrace the supporting means (2) and whose upper parts slidably embrace the pressing means (41, 42).

17. Device according to one of claims 1 to 15, characterized in that the housing (1) comprises two plates (10) applied each against the other and whose lower parts obtained by molding, stamping or analogous method, each shape an half of the supporting means (2) with respect to the median longitudinal plane of the groove (20) and of the bearing surfaces (22a, 22b) and whose upper parts slidably embrace the pressing means (41, 42).

18. Device according to one of claims 1 to 17, wherein a gel fills the housing (1; 7) above the supporting means (2), characterized in that the gel (24; 78) does not run under its own weight and does not ooze out through the housing openings.

19. Device according to claim 18, characterized in that the gel (24; 78) is not drawn outwards from the housing (1; 7) when the fibers (3) are withdrawn from the housing.

20. Device according to claim 18 or 19, characterized in that the gel (24; 78) acts as a self-cleaning agent for the fiber ends (3).

21. Device according to one of claims 1 to 20, characterized in that it comprises an optical magnifying system embedded in the housing (7) above the junction (Y'Y) of the fibers (3) in the groove (702) of the supporting means (701, 70) for observing the insertion of the fibers.

22. Device for connecting two bundles of optical fibers two by two, characterized in that it is formed by a stack of housings (1; 7) according to one of claims 1 to 21.

23. Device (6) according to claim 22, characterized in that it comprises a planar support having parallel partitions (61), in preference removable, between which the housings (1) are inserted.

24. Device according to claim 23. characterized in that each partition (61) comprises sprung tongues, bosses or analogous for locking adjacent housings (1).

25. Device according to one of claims 22 to 24, characterized in that two adjacent housings (Fig. 11) are arranged top to bottom.

**FIG.5**

421b  10

10

429b
427b
31b
30b
22b
220b

**FIG.4**

10  411b  10

417b
30b
20b

2

**FIG.1**

42a 41a 41b 42b

10
12a
44a
43a
43b
12b
44b
100

**FIG.6A**

41a  412a

45
413a

10
101a

**FIG.6B**

41a
412a

45
413a

10
101a

**FIG.7**

Y
X
X'
Y'
45

**FIG.8**

46

FIG.2

FIG.3

# FIG.9

47

# FIG.10

47

L

3

31    30    48

480

# FIG.11

5
50
1
422a
412a
412b    422b
53
52b    32b
52a
3b
32a
3a
1    422b    412b
412a
422a
53
51
54

FIG.12

FIG.14

FIG.13

FIG.15

17

0 103 527

# FIG.16

# FIG.17

# FIG.19

# FIG.18

# FIG.20